# EUROPEAN PATENT APPLICATION

(11) **EP 1 104 127 A1**
(43) Date of publication of application: **30.05.2001**
(21) Application number: 00931631.6
(22) Date of filing: 01.06.2000
(51) Int. Cl.: H04B 7/26, H04J 13/00

(54) **COMMUNICATION DEVICE**

(30) Priority: 08.06.1999 JP 16116699
(71) Applicant: MATSUSHITA ELECTRIC INDUSTRIAL CO., LTD., Kadoma-shi, Osaka 571-8501 (JP)
(72) Inventor: TODA, Takashi, Ishikawa-gun, Ishikawa 921-8824 (JP)
(74) Representative: Grünecker, Kinkeldey, Stockmair & Schwanhäusser Anwaltssozietät
(86) International application number: JP0003524
(87) International publication number: WO0076091

(57) **Abstract**

Despreading section 105 performs despreading processing on the reception signal in predetermined integration sections, rate conversion section 106 changes the rate of the despread reception signal by software processing, rate conversion section 117 changes the rate of a transmission baseband signal according to the amount of data to be transmitted, spreading section 118 performs spreading processing with a predetermined spreading factor, radio transmission section 119 decides a transmit power value based on the transmit power value at the time of the previous transmission stored in memory 120 and transmits the spread transmission signal. This makes it possible to change the transmission rate with a simple and small hardware configuration and implement continuous transmit power control even at variable rates.

## Description

### Technical Field

The present invention relates to a communication apparatus, and more particularly, to a communication apparatus used in communications based on a Code Division Multiple Access (hereinafter referred to as ^{"}CDMA") system.

### Background Art

In recent years, there is a drastically increasing demand for terrestrial mobile communications such as automobile and cellular phones and a technique for effective utilization of frequencies to secure capacity for more subscribers on limited frequency bands as well as high-speed and high-quality transmission is becoming more and more important.

A CDMA system is becoming the focus of attention as one of systems that allow effective utilization of frequencies.

However, the problem of the CDMA system in which a same frequency band is shared by a plurality of communicators is that signals of other communicators may become interference signals, causing the communication quality of the own channel to deteriorate.

A method for solving this problem is transmit power control. Transmit power control keeps the magnitude of reception power at a receiving station constant irrespective of the distance between the receiving station and transmitting station.

Transmit power control also includes control that changes the transmission rate of a baseband signal (hereinafter simply referred to as "transmission rate") according to the amount of data to be sent (hereinafter referred to as a "variable rate system").

An example of this variable rate system will be explained below.

In the case where the transmission rate of a communication apparatus using the variable rate system is changed to 1/8, the transmission time for sending a same 1 bit is octuplicated, and therefore the transmission level per 1 bit is kept even if the transmission station reduces transmit power per a unit time to 1/8.

Thus, when the amount of data to be sent is reduced, the communication apparatus reduces the transmission rate and also reduces transmit power according to the reduction of the transmission rate, thereby achieving power saving at the transmission station.

The CDMA-based communication apparatus can also change the transmission rate while keeping the chip rate constant by changing a spreading factor when the transmission signal is subjected to spreading processing.

When notified by the other end of communication of a change to the transmission rate and the changed transmission rate via a control channel, the reception system of the conventional communication apparatus changes the section of integration on the reception signal during despreading processing and performs demodulation according to the change in the transmission rate.

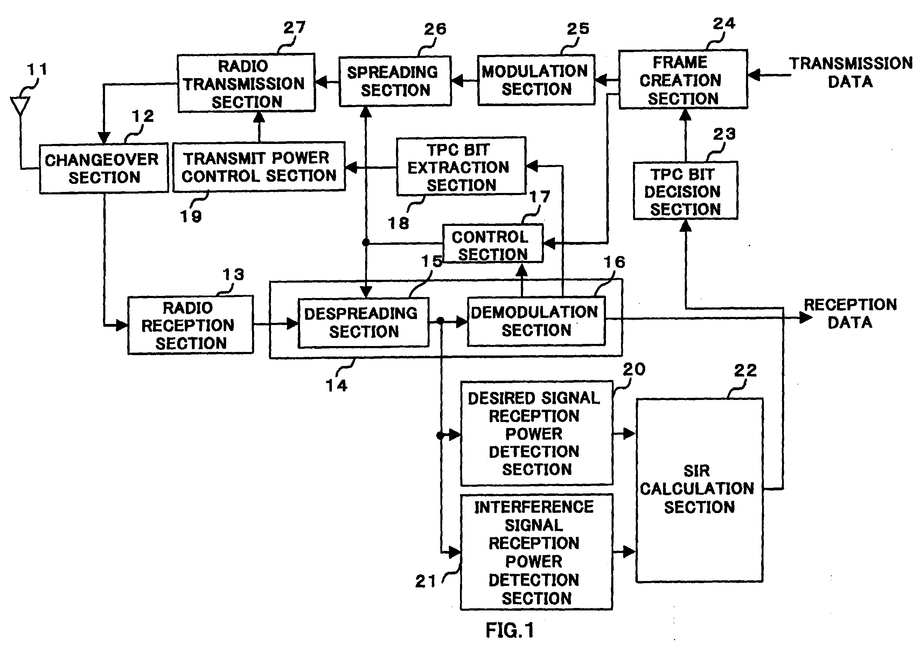

Hereinafter, the conventional communication apparatus that performs the transmit power control and changes the transmission rate as described above will be explained using FIG.1. FIG.1 is a main block diagram showing an outlined configuration of the conventional communication apparatus. Suppose the other end of communication in this conventional example also uses the variable rate system.

In FIG.1, antenna 11 receives a radio signal from the other end of communication. Changeover section 12 outputs the reception signal to radio reception section 13. Radio reception section 13 performs reception processing on the reception signal.

Demodulation processing section 14 is configured by despreading section 15 and demodulation section 16. Despreading section 15 performs despreading processing on the reception signal for every integration section specified by control section 17 and outputs the result to demodulation section 16.

Demodulation section 16 performs demodulation processing and error correction processing on the despread reception signal and acquires reception data.

Control section 17 acquires information on a change or no change to the transmission rate notified from the other end of communication and the changed transmission rate from the control channel data demodulated by demodulation section 16.

Then, control section 17 instructs despreading section 15 of a change to the integration section at timing of changing the transmission rate of the other end of communication based on this information.

TPC (Transmit Power Control) bit extraction section 18 extracts a TPC bit from the reception signal demodulated by demodulation section 16 and outputs the TPC bit obtained to transmit power control section 19.

Transmit power control section 19 controls transmit power in radio transmission section 27, which will be described later, based on the extracted TPC bit.

Desired signal reception power detection section 20 detects reception power of a desired signal from the despread reception signal and outputs the result to SIR calculation section 22.

Interference signal reception power detection section 21 detects reception power of an interference signal from the despread reception signal and outputs the result to SIR calculation section 22.

SIR (Signal Interference Ratio) calculation section 22 calculates an SIR from the detected desired signal reception power and interference signal reception power and outputs the calculation result to TPC bit decision section 23.

TPC bit decision section 23 decides the content of an instruction on transmit power control to the other end of communication based on the calculated SIR, creates a TPC bit to be inserted into a transmission signal and outputs the TPC bit to frame creation section 24.

Frame creation section 24 composes transmission signal frames from the transmission data and TPC bit and outputs to modulation section 25. Modulation section 25 performs modulation processing on the transmission signal and outputs to spreading section 26. Spreading. section 26 performs spreading processing on the modulated transmission signal according to the instruction on the change to the spreading factor from control section 17 and outputs the spread signal to radio transmission section 27. Radio transmission section 27 transmits the spread transmission signal with transmit power based on the instruction from transmit power control section 19 from antenna 11 via changeover section 12.

As shown above, the conventional communication apparatus seeks to realize power saving by changing a spreading factor according to the amount of transmission data and sending data at a transmission rate based on this spreading factor.

Furthermore, such a variable rate system is also applicable to a case where the own station is not notified by the other end of communication of the transmission rate via the control channel and the own station decides a change or no change to the transmission rate of the other end of communication and the changed transmission rate (hereinafter referred to as "blind rate decision") based on the reception signal.

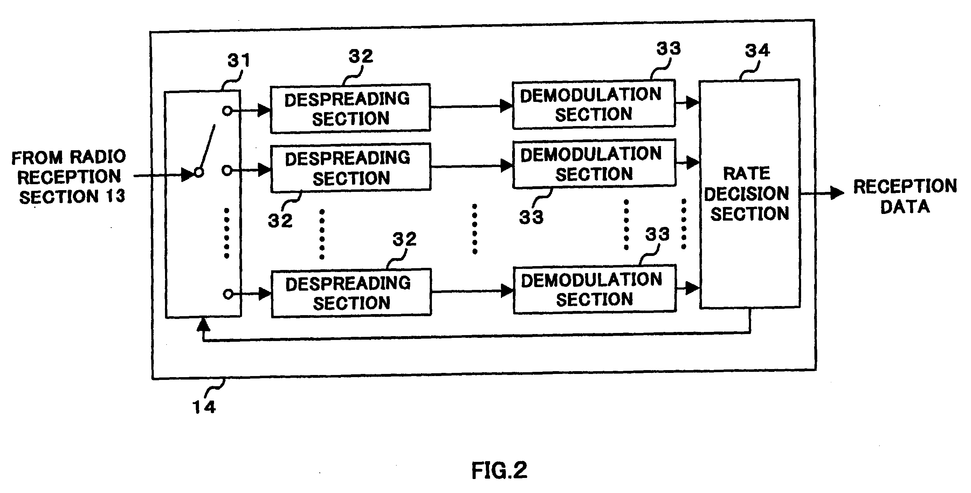

The case where the transmission rate is changed through a blind rate decision will be explained below using FIG.2.

The configuration and function except demodulation processing section 14 are the same as those in FIG.1, and therefore explanations thereof will be omitted and only demodulation processing section 14 will be explained. FIG.2 is a main block diagram showing a configuration of demodulation processing section 14 of the conventional communication apparatus that makes a blind rate decision.

When a blind rate decision is made, demodulation processing section 14 has a plurality of despreading sections 32. Switch 31 outputs the output of radio reception section 13 to all despreading sections 32 sequentially. Despreading sections 32 perform despreading processing in mutually different integration sections.

Demodulation sections 33 perform demodulation processing and error correction processing on the despread reception signal and obtains reception data. Rate decision section 34 decides the transmission rate of the reception signal by comparing the output values of all demodulation sections 33 using, for example, the result of a CRC (Cyclic Redundancy Check) check. The decision result is reflected in the switching of switch 31 and switch 31 decides the output destination of the signal based on the decision result. Hereinafter, the signal is subjected to despreading processing through the integration section according to the transmission rate.

Thus, when the transmission rate is changed in transmit power control using a TPC bit, the conventional communication apparatus changes the transmission rate by changing the spreading factor for spreading processing during transmission and changing the length of the integration section for despreading processing during reception in response to the change to the transmission rate by the other end of communication.

However, the problem of the conventional communication apparatus is that implementation of the variable rate system depends on the processing by the spreading section and despreading section, which complicates the apparatus or increases the size of the apparatus. This problem is more noticeable when a blind rate decision is made.

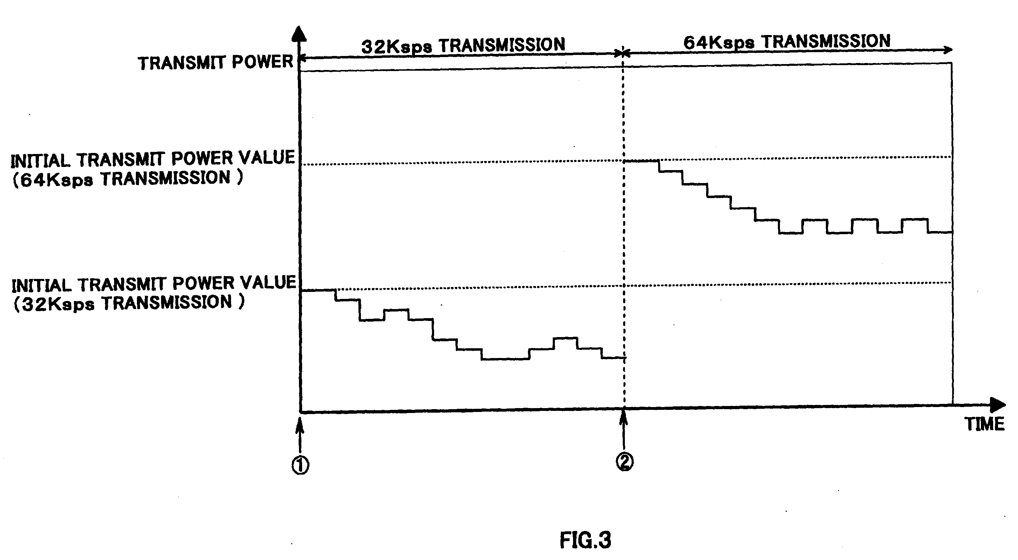

A variation of transmit power before and after the transmission rate is changed in the conventional communication, apparatus will be explained using FIG.3. FIG.3 shows a variation of transmit power in the case where the conventional communication apparatus changes the transmission rate.
① in FIG.3 indicates the time at which transmission is started at a transmission rate of 32 Ksps. The transmit power value moves up and down repeatedly from the initial value of transmit power through control and settles down to an appropriate value.
② indicates the time at which the transmission rate is changed from 32 Ksps to 64 Ksps. Here, the transmission power value is not continuous before and after the change to the transmission rate in the conventional communication apparatus, and therefore when the transmission rate is changed to 64 Ksps, transmission is started from the initial value (the initial value for 64 Ksps transmission) again. Then, the transmit power value is controlled to move up and down repeatedly and finally settles down to an appropriate value again.

As shown above, the conventional communication apparatus includes times during which transmission is performed with an inappropriate transmit power value every time the transmission rate is changed, which deteriorates the SIR ratio and thereby increases transmission errors.

Furthermore, the conventional communication apparatus performs transmit power control by measuring the SIR of received data to estimate the reception situation, and therefore increasing the transmission rate while transmit power is kept constant on the transmitting station side will cause the SIR measured value to decrease on the receiving station side, which in return will request the transmitting station to increase transmit power, which may cause transmission errors to occur repeatedly until the transmission apparatus manages to transmit signals with appropriate transmit power.

### Disclosure of Invention

It is a first object of the present invention to provide a communication apparatus that changes the transmission rate with a simple and small hardware configuration.

This object is attained by changing the transmission rate of a baseband signal as software processing through a DSP (Digital Signal Processor), etc. and performing spreading processing using a fixed spreading factor and despreading processing in predetermined integration sections.

It is a second object of the present invention to provide a communication apparatus that implements continuous transmit power control even at a variable rate.

This object is attained by storing a difference in transmit power values when signals are sent at different data rates beforehand and setting a transmit power value using the stored difference in transmit power values when the data rate is changed.

### Brief Description of Drawings

FIG.1 is a main block diagram showing an outlined configuration of a conventional communication apparatus;
FIG.2 is a main block diagram showing a configuration of a demodulation processing section of the conventional communication apparatus making a blind rate decision;
FIG.3 illustrates a variation of transmit power when the conventional communication apparatus changes a transmission rate;
FIG.4 is a main block diagram showing an outlined configuration of a communication apparatus according to Embodiment 1 of the present invention;
FIG.5 illustrates an example of rate conversion by a rate conversion section in a reception system of the communication apparatus according to Embodiment 1 of the present invention;
FIG.6 illustrates an example of rate conversion by a rate conversion section in a transmission system of the communication apparatus according to Embodiment 1 of the present invention;
FIG.7 illustrates a mode of variation of transmit power in the communication apparatus according to Embodiment 1 of the present invention;
FIG.8 illustrates a mode of variation of transmit power in the communication apparatus according to Embodiment 1 of the present invention;
FIG.9 is a main block diagram showing an outlined configuration of a demodulation processing section of a communication apparatus according to Embodiment 2 of the present invention; and
FIG.10 is a main block diagram showing an outlined configuration of a demodulation processing section of a communication apparatus according to Embodiment 3 of the present invention.

### Best Mode for Carrying out the Invention

With reference now to the attached drawings, embodiments of the present invention will be explained below.

### (Embodiment 1)

The communication apparatus according to this embodiment changes the transmission rate, saves the transmit power value before the change to the transmission rate and reflects the transmit power value before the change in the initial value of changed transmit power.

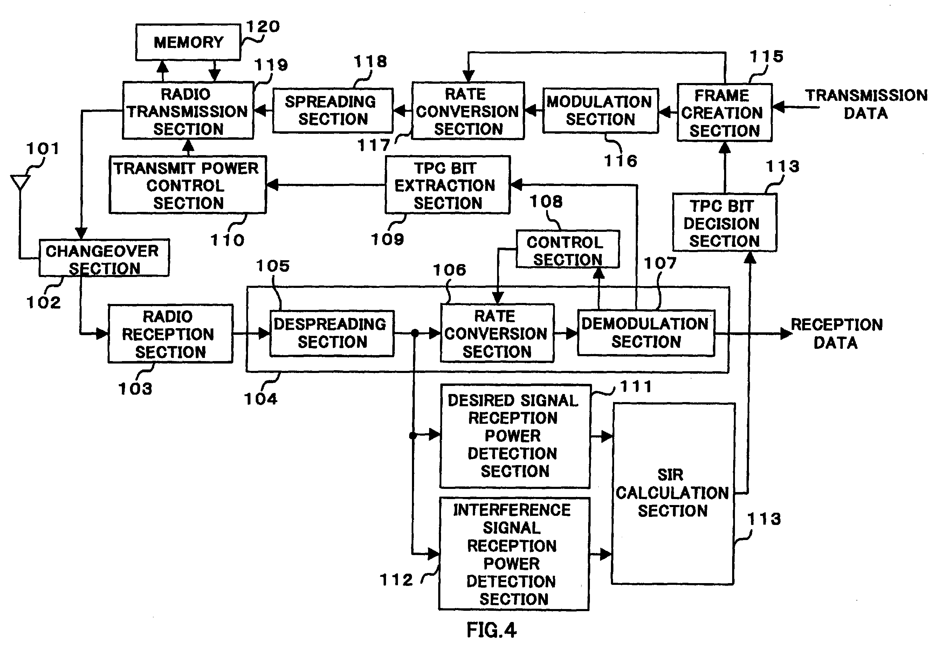

The communication apparatus according to this embodiment will be explained below. FIG.4 is a main block diagram showing an outlined configuration of the communication, apparatus according to Embodiment 1 of the present invention.

In FIG.4, antenna 101 receives a radio signal, outputs the radio signal to changeover section 102 or sends a transmission signal as a radio signal. Changeover section 102 switches between transmission and reception signals, outputs the transmission signal to antenna 101 and outputs the reception signal to radio reception section 103. Radio reception section 103 performs reception processing on the reception signal and outputs the reception signal to demodulation processing section 104.

Demodulation processing section 104 is configured by despreading section 105, rate conversion section 106 and demodulation section 107. Despreading section 105 performs despreading processing on the reception signal and outputs to rate conversion section 106, desired signal reception power detection section 111 and interference signal reception power detection section 112.

Rate conversion section 106 converts the reception signal output from despreading section 105 to a rate specified by control section 108 and outputs to demodulation section 107. This conversion will be described later.

Demodulation section 107 performs demodulation processing and error correction processing on the reception signal subjected to despreading processing and rate conversion and acquires reception data.

Control section 108 acquires information on a change or no change to the transmission rate sent from the other end of communication and the changed transmission rate from the control channel data demodulated by demodulation section 107 and then instructs rate conversion section 106 of a change to the integration section at timing of changing the transmission rate of the other end of communication.

TPC bit extraction section 109 extracts a TPC bit from the reception signal output from demodulation section 107 and outputs to transmit power control section 110. Transmit power control section 110 controls transmit power at radio transmission section 119 based on the extracted TPC bit. The operation of radio transmission section 119 will be described later.

Desired signal reception power detection section 111 detects reception power of a desired signal from the despread reception signal and outputs to SIR calculation section 113. Interference signal reception power detection section 112 detects reception power of an interference signal from the despread reception signal and outputs to SIR calculation section 113.

SIR calculation section 113 calculates an SIR from the detected reception power of the desired signal and reception power of the interference signal and outputs the calculation result to TPC bit decision section 114.

TPC bit decision section 114 decides the content of an instruction on transmit power control to the other end of communication based on the calculated SIR, creates a TPC bit to be inserted into a transmission signal and outputs the TPC bit to frame creation section 115.

Frame creation section 115 composes transmission signal frames from the transmission data and the TPC bit and notifies the amount of the transmission data to rate conversion section 117, which will be described later and outputs the composed frames to modulation section 116.

Modulation section 116 performs modulation processing on the transmission signal and outputs to rate conversion section 117.

Rate conversion section 117 converts the transmiss ion signal to a high transmission rate when the amount of data is large and to a low transmission rate when the amount of data is small and outputs to spreading section 118. Detailed operation of rate conversion section 117 will be described later.

Spreading section 118 performs spreading processing on the transmission signal subjected to modulation processing and rate conversion using a predetermined spreading factor and outputs to radio transmission section 119. Radio transmission section 119 amplifies the spread transmission signal to transmit power based on the instruction from transmit power control section 110 and transmits from antenna 101 via changeover section 102. Memory 120 stores the transmit power value in radio transmission section 119 and outputs the stored transmit power value to radio transmission section 119 when the transmission rate is changed.

Then, the operation of the communication apparatus with the above configuration will be explained.

The reception system will be explained first. A reception signal received through antenna 101 is input to radio reception section 103 via changeover section 102 and subjected to reception processing by radio reception section 103.

The reception signal subjected to reception processing is input to demodulation processing section 104, subjected to despreading processing by despreading section 105, converted to the transmission rate of the other end of communication by rate conversion section 106 and subjected to demodulation processing and error correction processing by demodulation section 107.

A TPC bit in the reception signal is extracted by TPC bit extraction section 109.

The transmission power value is decided by transmit power control section 110 based on the TPC bit and output to radio transmission section 119. The decided transmit power value is stored in memory 120.

Of the despread reception signal, desired signal reception power detection section 111 detects reception power of a desired signal and interference signal reception power detection section 112 detects reception power of an interference signal.

An SIR is calculated based on the reception power of the desired signal and reception power of the interference signal detected in SIR calculation section 113.

A TPC bit is created by TPC bit decision section 114 based on the SIR as the content of a transmit power control instruction to the other end of communication and output to frame creation section 115.

Then, the transmission system will be explained. A transmission signal is created by frame creation section 115 from the TPC bit created by TPC bit decision section 114 and transmission data.

The transmission signal is subjected to modulation processing by modulation section 116 and output to rate conversion section 117.

The transmission signal output from modulation section 116 is converted by rate conversion section 117 to a high transmission rate when the amount of transmission data is large and to a low transmission rate when the amount of transmission data is small and output to spreading section 118.

The transmission signal output from rate conversion section 117 is subjected to spreading processing by spreading section 118 with a spreading factor of 16, that is, assuming that the transmission rate of the transmission signal is 256 Ksps.

The spread transmission signal is output to radio transmission section 119 and sent from antenna 101 via changeover section 102 with a transmit power value decided by transmit power control section 110.

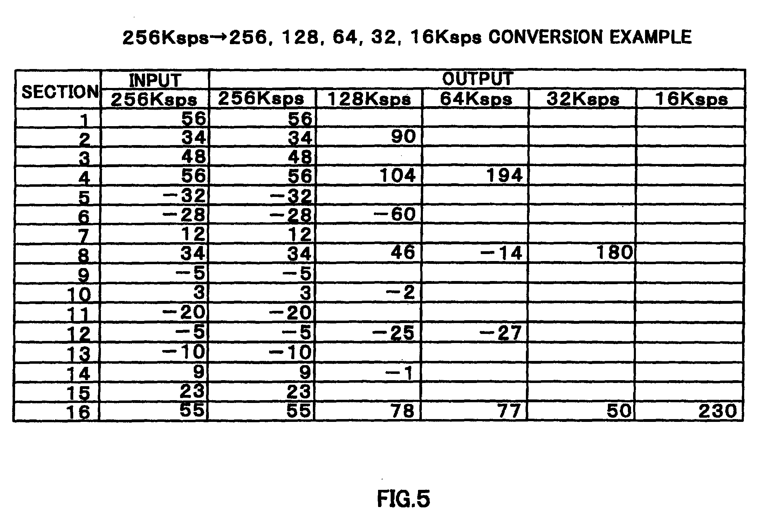

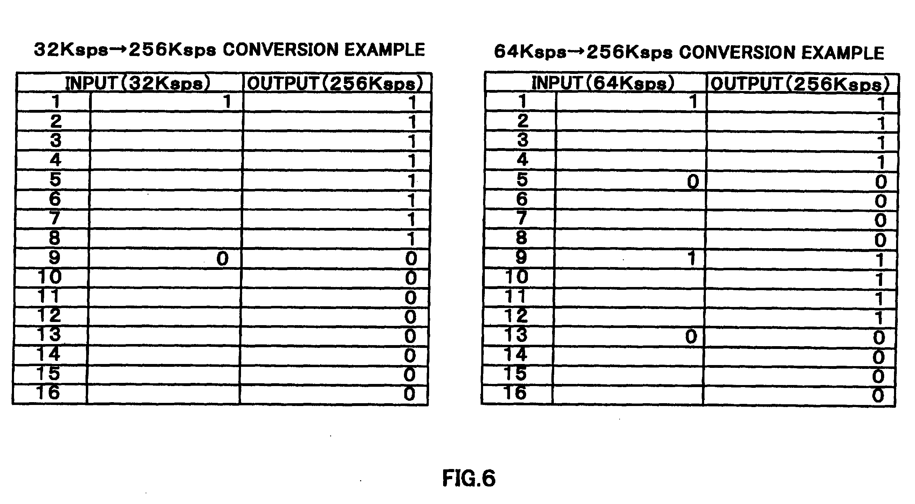

Then, conversion of the transmission rate by rate conversion sections 106 and 117 will be explained using FIG.5 and FIG.6.

FIG.5 illustrates an example of rate conversion by the rate conversion section of the reception system of the communication apparatus according to Embodiment 1 of the present invention.

Despreading section 105 treats all reception signals in a fixed manner as a signal with a transmission rate of 256 Ksps. Therefore, a 256-Ksps signal is input to rate conversion section 106 as shown in FIG.5.

Rate conversion section 106 calculates a sum of input signals for this input signal based on the transmission rate notified from control section 108 and outputs this result.

For example, when the transmission rate is 128 Ksps, rate conversion section 106 calculates a sum of value "56" of the input signal in section 1 and value "34" of the input signal in section 2 and outputs value "90" as an output signal. Furthermore, rate conversion section 106 calculates a sum of value "48" of the input signal in section 3 and value "56" of the input signal in section 4 and outputs value "104" as an output signal.

When the transmission rate is 64 Ksps, rate conversion section 106 calculates a sum of value "56" of the input signal in section 1, value "34" of the input signal in section 2, value "48" of the input signal in section 3 and value "56" of the input signal in section 4 and outputs value "194" as an output signal.

When the transmission rate is 32 Ksps, rate conversion section 106 calculates a sum of values "56", "34", "48", "56", "-32", "-28", "12" and "34" of the input signals from section 1 to section 8 and outputs value "180" as an output signal.

When the transmission rate is 16 Ksps, rate conversion section 106 calculates a sum of values "56", "34", "48", "56", "-32", "-28", "12", "34", "-5", "3", "-20", "-5", "-10", "9", "23" and "55" of the input signals from section 1 to section 16 and outputs value "230" as an output signal.

In this conversion, a sum of values of input signals of a plurality of symbols input is calculated and the result is output as 1 symbol as shown in FIG.5.

Though, a simple sum of symbol values is calculated in this conversion, it is also possible to calculate a sum after assigning weights to symbols and output the result. In this case, weights can also be calculated from the SIR, etc. of the despread signal.

On the other hand, spreading section 118 treats all transmission signals in a fixed manner as a signal with a transmission rate of 256 Ksps, and therefore rate conversion section 117 converts the input signal to a signal with a transmission rate of 256 Ksps and outputs.

FIG.6 is a conversion table showing an example of rate conversion in the rate conversion section of the transmission system of the communication apparatus according to Embodiment 1 of the present invention.

When a signal with a transmission rate of 32 Ksps is converted to a signal with a transmission rate of 256 Ksps, for one symbol input, 8 symbols are output at a transmission rate of 256 Ksps.

When a signal with a transmission rate of 64 Ksps is converted to a signal with a transmission rate of 256 Ksps, for one symbol input, 4 symbols are output at a transmission rate of 256 Ksps.

As shown above, it is possible to convert the transmission rate by outputting a plurality of symbols at an output transmission rate for one symbol input.

Furthermore, rate conversion sections 106 and 117 can also change the transmission rate by software processing.

Then, a change of a transmit power value before and after a change of the transmission rate will be explained.

Memory 120 stores the transmit power value of a signal output from radio transmission section 119. Then, when the transmission rate is changed, radio transmission section 119 reads the transmit power value before a change of the transmission rate stored in memory 120 and decides the transmit power value after the change of the transmission rate based on the transmit power value before the change of the transmission rate.

An example illustrating how this power value is decided is shown below.

One method is that radio transmission section 119 calculates a difference between the transmit power value after the change of the transmission rate and the initial value of transmit power with the transmission rate before the change of the transmission rate and restarts transmission with a value resulting from adding this difference to the initial value of transmit power with the transmission rate after the change of the transmission rate.

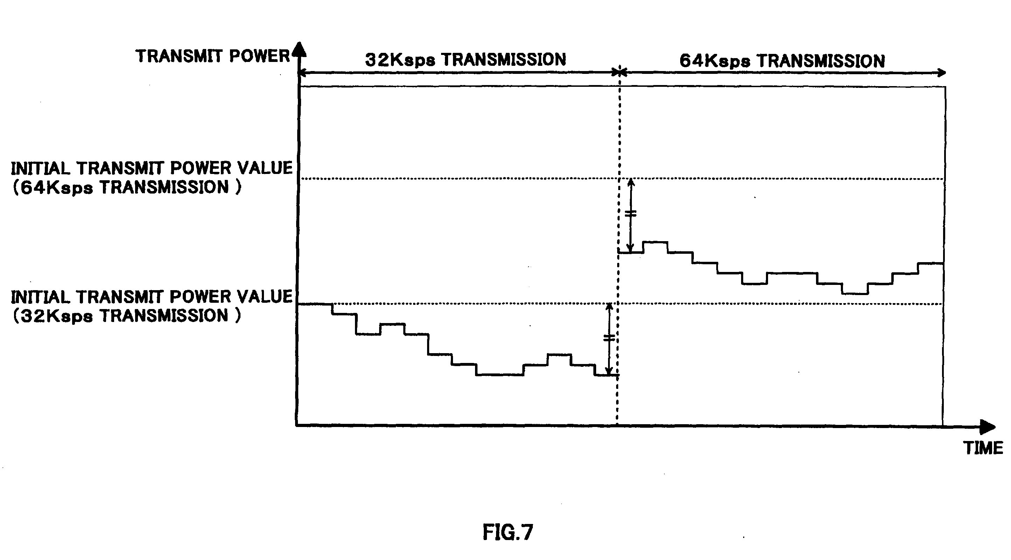

FIG.7 illustrates a mode of variation of a transmit power value of the communication apparatus according to Embodiment 1 of the present invention.

FIG.7 shows a variation of transmit power when the transmission rate is changed from 32 Ksps to 64 Ksps using this method.

As shown in FIG.7, when the transmission rate is changed from 32 Ksps to 64 Ksps, radio transmission section 119 calculates a difference between a transmit power value when the transmission rate is changed and the initial value of transmit power when the transmission rate is 32 Ksps and sends a signal with a power value resulting from adding this difference to the initial value of transmit power when the transmission rate is 64 Ksps.

Another method is that radio transmission section 119 restarts transmission with a value resulting from adding a difference between the initial value of transmit power at the transmission rate before the change of the transmission rate and the initial value of transmit power after the change of the transmission rate to the transmit power value when the transmission rate is changed.

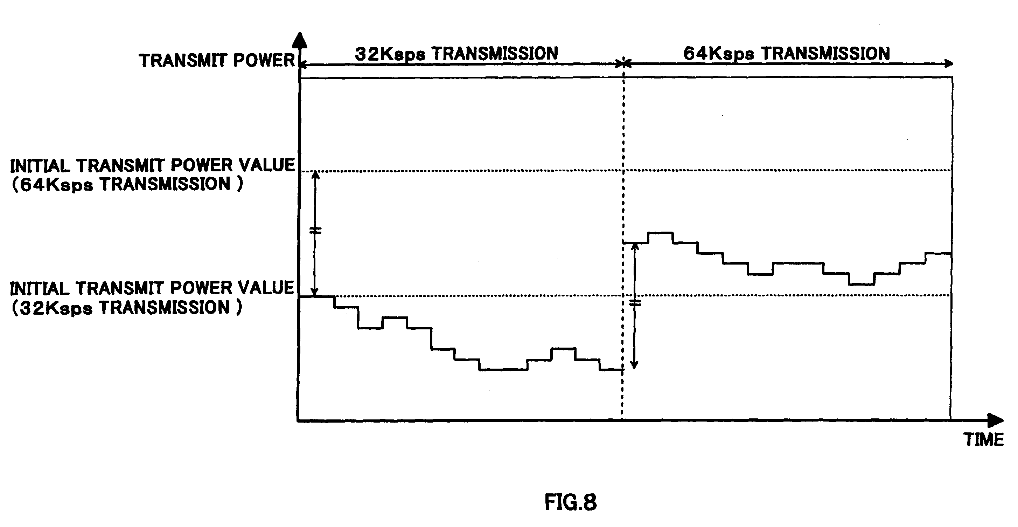

FIG.8 illustrates a mode of variation of a transmit power value of the communication apparatus according to Embodiment 1 of the present invention.

FIG.8 shows a variation of transmit power when the transmission rate is changed from 32 Ksps to 64 Ksps using this method. As shown in FIG.8, when the transmission rate is changed from 32 Ksps to 64 Ksps, radio transmission section 119 sends a signal with a transmit power value resulting from adding a difference between the initial value of transmit power with the transmission rate (here 64 Ksps) after the transmission rate is changed and the initial value of transmit power with the transmission rate (here 32 Ksps) before the transmission rate is changed to the transmit power value before the transmission rate is changed.

As shown above, this embodiment reflects the transmit power value before the transmission rate is changed in the transmit power value after the transmission rate is changed and thereby eliminates the need to repeat transmit power control from the initial value every time the transmission rate is changed, which will reduce the time during which transmission is performed with inappropriate transmit power and reduce the transmission error rate.

Moreover, since this embodiment performs a change to the transmission rate as software processing by means of a DSP, etc. instead of performing the change during spreading processing or despreading processing, it is possible to prevent the hardware scale of the variable rate system from becoming more complicated or expanded. Furthermore, since despreading processing requires fewer bits to be processed at a time, despreading processing can be carried out with a smaller register.

The method of deciding the power value in which the power value before this change of the transmission rate is reflected is not limited to the above example, but any method can be used.

Furthermore, since this embodiment determines transmit power after the transmission rate is changed based on the transmit power value before the transmission rate is changed, it is possible to reduce the time during which transmission is performed with an inappropriate transmit power value and suppress transmission errors.

### (Embodiment 2)

The apparatus according to this embodiment has a similar configuration to that of Embodiment 1, except that a blind rate decision is made.

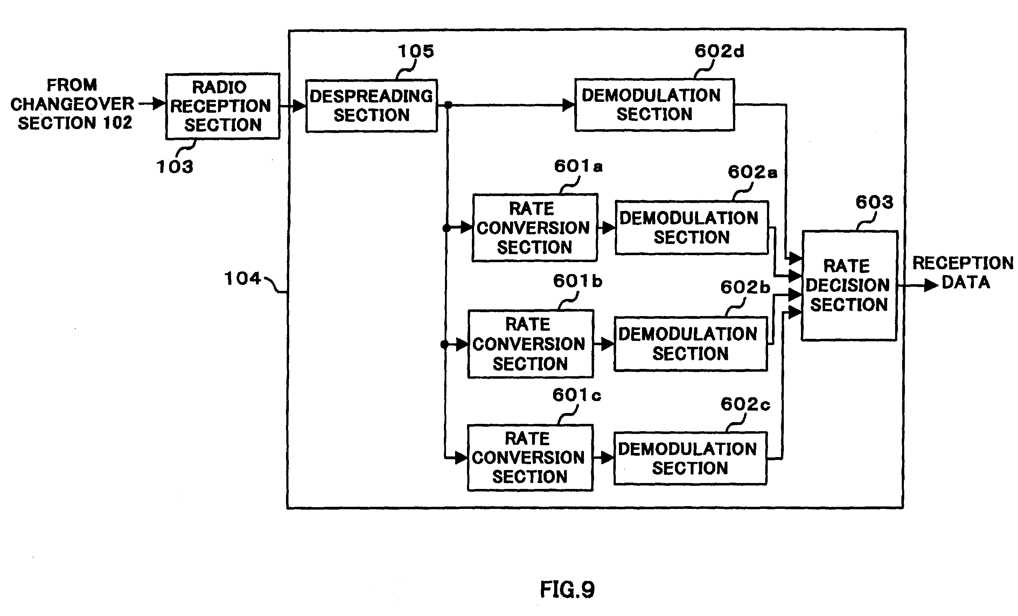

The communication apparatus according to this embodiment will be explained below using FIG.9. FIG.9 is a main block diagram showing an outlined configuration of a demodulation processing section of the communication apparatus according to Embodiment 2 of the present invention. The parts with the same configuration as that of Embodiment 1 will be assigned the same reference numerals and detailed explanations thereof will be omitted.

Demodulation processing section 104 according to this embodiment is configured by a plurality of rate conversion sections 601, a plurality of demodulation sections 602 and rate decision section 603, and performs rate conversion processing on a reception signal at all transmission rates likely to be set (here, 32 Ksps, 64 Ksps, 128 Ksps, 256 Ksps).

Despreading section 105 always treats the reception signal in a fixed manner as a signal with the highest transmission rate (here, 256 Ksps) as in the case of Embodiment 1.

Here, since the transmission rate of the reception signal is likely to be one of four rates, 32 Ksps, 64 Ksps, 128 Ksps and 256 Ksps, the reception signal is temporarily converted from each transmission rate to the highest transmission rate.

That is, rate conversion section 601a performs conversion from 32 Ksps to 256 Ksps. Rate conversion section 601b performs conversion from 64 Ksps to 256 Ksps. Rate conversion section 601c performs conversion from 128 Ksps to 256 Ksps. In the case of 256 Ksps, no conversion is required.

Then, demodulation sections 602a to 602d provided for each transmission rate (here 4 rates) perform demodulation processing and error correction processing on each signal at a transmission rate of 256 Ksps.

Rate decision section 603 decides the transmission rate of the reception signal by comparing the output values of demodulation sections 602a to 602d based on CRC check results, etc., outputs a signal converted to the decided transmission rate and obtains reception data.

Thus, this embodiment decides the transmission rate based not on the result of despreading processing, but on the result of transmission rate conversion, making it possible to prevent the hardware scale of the variable rate system from becoming more complicated and expanded.

This embodiment describes the case where there are four kinds of transmission rate likely to be set, 32 Ksps, 64 Ksps, 128 Ksps and 256 Ksps, but the present invention places no limit on the value or type of transmission rate.

It is also possible to provide only one set of rate conversion section and demodulation section and time-share these sections.

### (Embodiment 3)

The communication apparatus according to this embodiment has a similar configuration to that of Embodiment 1, except that data items with different transmission rates are received simultaneously.

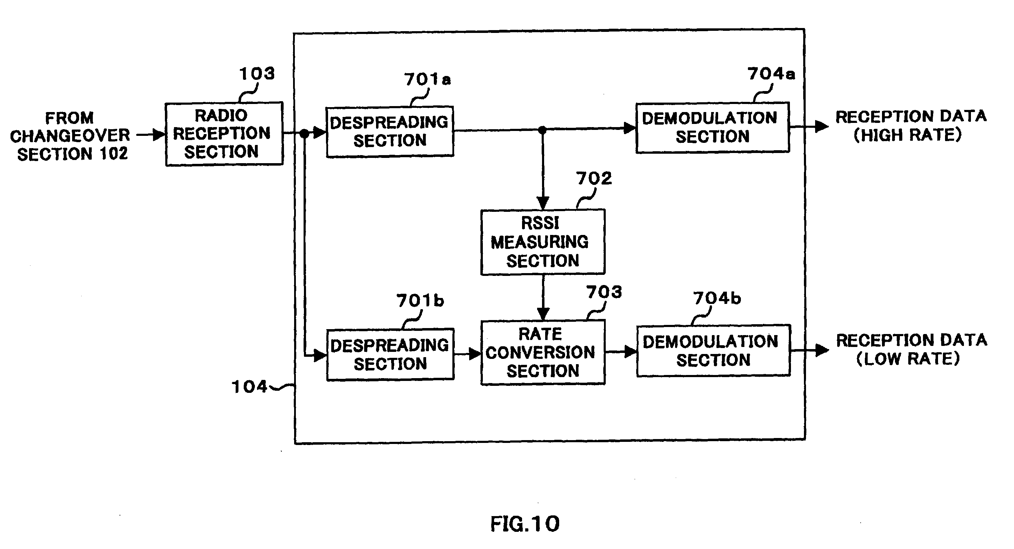

The communication apparatus according to this embodiment will be explained below using FIG.10. FIG.10 is a main block diagram showing an outlined configuration of a demodulation processing section of the communication apparatus according to Embodiment 3 of the present invention.

The communication apparatus according to this embodiment, provided with a plurality of despreading sections, can process a plurality of signals having different transmission rates simultaneously. Here, a case where a signal with a transmission rate of 256 Ksps and a signal with a transmission rate of 32 Ksps are processed simultaneously will be explained.

In FIG.10, as in the case of Embodiment 1, radio reception section 103 always performs reception processing on the reception signal at the highest transmission rate (suppose 256 Ksps here) and outputs to despreading section 701a and despreading section 701b.

Despreading section 701a treats the reception signal in a fixed manner as a signal with a transmission rate of 256 Ksps, despreads the reception signal and outputs the despread signal to RSSI measuring section 702 and demodulation section 704a.

Despreading section 701b treats the reception signal in a fixed manner as a signal with a transmission rate of 256 Ksps, despreads the reception signal and outputs the despread signal to rate conversion section 703.

Desired signal power (RSSI) measuring section 702 measures an RSSI of each symbol and outputs this result to rate conversion section 703.

Rate conversion section 703 assigns weights to symbols using the output of RSSI measuring section 702 as a weighting factor, converts the transmission rate in the integration section corresponding to a low rate and outputs the symbol obtained to demodulation section 704b.

Demodulation section 704a performs demodulation processing and error correction processing on a high-rate reception signal and obtains reception data.

Demodulation section 704b performs demodulation processing and error correction processing on a low-rate reception signal and obtains reception data.

Thus, this embodiment performs high-rate despreading on a symbol sent at a low rate and ??? can receive and demodulate a plurality of reception signals with different transmission rates simultaneously.

Moreover, since a low-rate communication channel is believed to propagate through the same transmission path as that for a high-rate communication channel, this embodiment can reduce influences of fading shorter than the symbol cycle interval through RSSI information of each symbol of high-rate data, improving reception performance. Furthermore, the transmission apparatus of the other end of communication can further reduce transmit power.

Here, a combination of transmission rates of signals received simultaneously is not limited to 256 Ksps and 32 Ksps, but it is possible to apply the present invention to any combinations and perform simultaneous processing.

Furthermore, the communication apparatus of the present invention can also use a hardware processing apparatus for the despreading section and a signal processing apparatus such as DSP for the rate conversion section.

Thus, by despreading the received signal at the highest transmission rate of hardware processing and performing rate conversion on the despread signal through software processing such as DSP, this embodiment can reduce the size of data processed at a time through processing at a high transmission rate and reduce the circuit scale, and the demodulation section can demodulate the signal at the transmission rate at which the signal is actually sent through rate conversion using DSP, etc.

As described above, by changing the transmission rate of a baseband signal as software processing before spreading processing and after despreading processing, the present invention can perform spreading processing using a predetermined spreading factor and despreading processing in predetermined integration sections, change the transmission rate with a simple and small hardware configuration and implement continuous transmit power control even at variable rates.

The present invention can be implemented in various manners without departing from the spirit or main features thereof. Therefore, it should be noted that the foregoing embodiments have been provided merely for the purpose of explanation and are in on way to be construed as limiting of the present invention. The scope of the present invention is indicated by the scope of the appended claims, and in no way limited by the text of the specification. Moreover, all modifications and changes that fall within the equivalent scope of the appended claims are deemed to be within the scope of the present invention.

This application is based on the Japanese Patent Application No.HEI 11-161166 filed on June 8, 1999, entire content of which is expressly incorporated by reference herein.

## Claims

1. A communication apparatus comprising:
calculating means for calculating a data rate of transmission data based on the amount of transmission data; and
transmission symbol converting means for outputting a transmission symbol the number of times based on said data rate and converting to said data rate.

2. The communication apparatus according to claim 1, wherein the transmission symbol converting means calculates a transmission symbol conversion value obtained by dividing the data rate before the conversion by the data rate after the conversion and outputs the transmission symbol the number of times of the transmission symbol conversion value.

3. A communication apparatus comprising:
information extracting means for extracting information on a data rate from the reception signal; and
reception symbol converting means for converting the reception symbol to the data rate based on said information.

4. The communication apparatus according to claim 3, wherein the reception symbol converting means adds up a plurality of input symbols based on the data rate information and outputs the addition result as one symbol.

5. The communication apparatus according to claim 3, wherein the reception symbol converting means calculates a reception symbol conversion value obtained by dividing the data rate before the conversion by the data rate after the conversion, adds up symbols corresponding in number with the reception symbol conversion values and outputs the addition result as one symbol.

6. The communication apparatus according to claim 3, further comprising:
despreading means for despreading the reception signal at a predetermined data rate; and
quality calculating means for calculating the quality of the despread reception symbol, wherein the reception symbol converting means adds up a plurality of input symbols by assigning weights based on said quality and outputs the addition result as one symbol.

7. A communication apparatus comprising:
a plurality of reception symbol converting means; and
signal extracting means for deciding a transmission data rate from quality of a plurality of reception signals processed at mutually different data rates and extracting a reception signal processed at the transmission data rate from among a plurality of reception signals based on the decision result.

8. A communication apparatus comprising:
storing means for storing an initial transmit power value at each data rate;
transmit power instructing means for instructing on transmit power based on said initial transmit power value; and
transmitting means for transmitting a signal with a transmit power value according to said transmit power instruction.

9. The communication apparatus according to claim 8, wherein the transmit power instructing means calculates a transmit power difference obtained by subtracting the transmit power value immediately before the data rate is changed from the initial transmit power value at the data rate before the change and instructs a value obtained by subtracting said transmit power difference from the initial transmit power value with the changed data rate as the transmit power value after the data rate change.

10. The communication apparatus according to claim 8, wherein the transmit power instructing means calculates an initial transmit power difference obtained by subtracting the initial transmit power value at the changed data rate from the initial transmit power value at the data rate before the change and instructs a value obtained by adding said initial transmit power difference to the transmit power value with the data rate immediately before the change as the transmit power value after the data rate change.

11. A base station apparatus equipped with a communication apparatus, said communication apparatus comprising:
calculating means for calculating a data rate of transmission data based on the amount of transmission data; and
transmission symbol converting means for outputting a transmission symbol the number of times based on said data rate and converting to said data rate.

12. A communication terminal apparatus equipped with a communication apparatus, said communication apparatus comprising:
calculating means for calculating a data rate of transmission data based on the amount of transmission data; and
transmission symbol converting means for outputting a transmission symbol the number of times based on said data rate and converting to said data rate.

13. A base station apparatus equipped with a communication apparatus, said communication apparatus comprising:
information extracting means for extracting information on a data rate from the reception signal; and
reception symbol converting means for converting the reception symbol to the data rate based on said information.

14. A communication terminal apparatus equipped with a communication apparatus, said communication apparatus comprising:
information extracting means for extracting information on a data rate from the reception signal; and
reception symbol converting means for converting the reception symbol to the data rate based on said information.

15. A base station apparatus equipped with a communication apparatus, said communication apparatus comprising:
a plurality of reception symbol converting means; and
signal extracting means for deciding a transmission data rate from quality of a plurality of reception signals processed at mutually different data rates and extracts a reception signal processed at the transmission data rate from among a plurality of reception signals based on the decision result.

16. A communication terminal apparatus equipped with a communication apparatus, said communication apparatus comprising:
a plurality of reception symbol converting means; and
signal extracting means for deciding a transmission data rate from quality of a plurality of reception signals processed at mutually different data rates and extracts a reception signal processed at the transmission data rate from among a plurality of reception signals based on the decision result.

17. A base station apparatus equipped with a communication apparatus, said communication apparatus comprising:
storing means for storing an initial transmit power value at each data rate;
transmit power instructing means for instructing on transmit power based on said initial transmit power value; and
transmitting means for transmitting a signal with a transmit power value according to said transmit power instruction.

18. A communication terminal apparatus equipped with a communication apparatus, said communication apparatus comprising:
storing means for storing an initial transmit power value at each data rate;
transmit power instructing means for instructing on transmit power based on said initial transmit power value; and
transmitting means for transmitting a signal with a transmit power value according to said transmit power instruction.

19. A communication method comprising:
a data rate calculating step of calculating a data rate of transmission data based on the amount of transmission data; and
a transmission symbol converting step of outputting a transmission symbol the number of times based on said data rate and converting to said data rate.

20. A communication method comprising:
an information extracting step of extracting information on a data rate from the reception signal; and
a reception symbol converting step of converting the reception symbol to the data rate based on said information.

21. A communication method comprising:
a plurality of reception symbol converting steps; and
signal extracting step of deciding a transmission data rate from quality of a plurality of reception signals processed at mutually different data rates and extracting a reception signal processed at the transmission data rate from among a plurality of reception signals based on the decision result.

22. A communication method comprising:
a storing step of storing an initial transmit power value at each data rate;
a transmit power instructing step of instructing on transmit power based on said initial transmit power value; and
a transmitting step of transmitting a signal with a transmit power value according to said transmit power instruction.
